**Europäisches Patentamt**

(19) **European Patent Office**

**Office européen des brevets**

(11) Publication number : **0 498 592 A2**

(12) # EUROPEAN PATENT APPLICATION

(21) Application number : **92300889.0**

(22) Date of filing : **03.02.92**

(51) Int. Cl.⁵ : **H04R 25/00,** C08L 33/06, C08K 13/02

(30) Priority : **06.02.91 JP 15406/91**

(43) Date of publication of application :
**12.08.92 Bulletin 92/33**

(84) Designated Contracting States :
**AT BE CH DE DK ES FR GB GR IT LI LU NL SE**

(71) Applicant : **IMPERIAL CHEMICAL INDUSTRIES PLC**
**Imperial Chemical House, Millbank**
**London SW1P 3JF (GB)**

(72) Inventor : **Wakabayashi, Sumio**
**2-32-6 Umezono**
**Tsukuba-shi, Ibaraki (JP)**
Inventor : **Doba, Takahisa**
**2-33-24 Umezono**
**Tsukuba-shi, Ibaraki (JP)**

(74) Representative : **Stephenson, Kenneth et al**
**ICI Group Patents Services Dept. PO Box 6**
**Shire Park Bessemer Road**
**Welwyn Garden City, Herts, AL7 1HD (GB)**

(54) **Coloured hearing aid shell.**

(57)   A coloured heating aid shell capable of being produced in a single moulding operation comprising a visible light-cured moulding of a visible light-curable resin composition containing a fillet and/or a colouring matter.

This invention relates to a coloured hearing aid shell and more particularly to a coloured hearing aid shell capable of being produced from a coloured resin composition in a single moulding operation and also to a process for the production thereof.

The hearing aid shells to which the invention relates are of the type which fit the shape of the concha and external auditory canal (hereinafter referred to as the outer ear) of the user and which are coloured so as to be similar to or harmonise with the skin colour of the user's outer ear.

One method for the production of hearing aid shells has been described in Japanese Patent Disclosure 61-296900. In this method, a model of an ear is prepared from an actual ear by casting with a moulding material and is used to prepare a female mould using plaster and the like. A heat-meltable material such as paraffin wax is then uniformly coated on the inner surface of the female mould and a silicone resin composition is poured in and cured to produce a male mould fitting inside the female mould with appropriate clearance provided by the wax. The cured male mould, made of silicone resin, is taken out and the heat-meltable material adhering to the inside of the female mould is melted and removed. The male and female moulds are then fitted together and a resin composition is poured into the clearance between them and cured to produce an ear shell corresponding to said clearance. This process is complicated and time-consuming to operate.

In order to overcome the problems associated with the above mentioned process, a method has been developed by Dreve-Otoplastic Gmbh in which a UV-curable resin composition is poured into a female mould made from a transparent silicone resin composition and then the UV-curable composition in contact with the mould is cured by UV radiation to produce an ear shell which is subsequently coloured. This process requires that the female mould must be made from a colourless, highly transparent and expensive silicone resin and also that the UV-curable resin composition should be colourless and transparent. Even when these conditions are satisfied, it is difficult to get the UV-curing resin composition to cure to sufficient depth. This is especially so for parts which are hidden by an interface between a complicated shaped female mould and said resin composition and it can be very difficult to produce a hearing aid shell having an irregular and complicated shape with a wall or membrane of uniform thickness. If a hearing aid is manufactured from a hearing aid shell of uneven thickness, there arises a howling phenomenon which causes discomfort for the user and defeats the object of the hearing aid. Furthermore, a hearing aid shell must be coloured in a skin colour but a UV-curable resin composition containing a colouring matter cannot be successfully cured. It is necessary, therefore, to colour the shaped hearing aid shell after preparation, adding an extra process step. Post-colouring of the hearing aid shell by, for example, painting will inevitably increase its size to some extent and careless painting can produce an unsatisfactory article.

It has now been found that coloured hearing aid shells having substantially uniform thickness, typically in the range from about 0.5 mm to about 2 mm, can be produced by filling an appropriately shaped transparent or semi-transparent female mould with a visible light-curable resin composition containing fillers and/or colouring matters and then applying visible light from outside the mould to the interface between the mould and the resin composition and that the thickness of the hearing aid shells so obtained can be varied substantially as desired.

Accordingly, the invention provides a coloured hearing aid shell comprising a visible light-cured moulding of a visible light-curable resin composition containing a filler and/or a colouring matter.

The invention further provides a method for the preparation of a coloured hearing aid shell which comprises charging a transparent or semi-transparent female mould corresponding to the shape of an outer ear with a visible light-curable resin composition containing a filler and/or colouring matter and applying visible light from outside the mould to the resin composition in contact with the inner surface of the mould whereby to effect cure of said resin composition to the desired depth.

The female mould itself may be prepared from a transparent or semi-transparent curable material using an ear model which has been made by taking an impression of the outer ear of the intending user of the hearing aid. The nature and amounts of the filler and/or colouring matter will be such as to provide a product matching the skin colour of the intending user.

Curable materials from which the female mould can be made include transparent or semi-transparent polyvinyl chloride (hereinafter referred to as PVC) plastisols, transparent or semi-transparent curable silicone resin compositions and aqueous solutions or dispersions of natural polymers, for example gelatine or alginate solutions.

PVC plastisols are dispersions of finely-divided PVC in plasticisers such as dibutyl phthalate, dioctyl phthalate and the like. Their viscosities and the hardness of the cured resin can be varied by adjusting the quantity of plasticiser. Commercial products are available such as SH-108T (a product of Kobayashi KK) and the like. PVC plastisols can be cured at temperatures of 120-220°C for a time of 10-60 minutes, preferably 150-160°C for 20-40 minutes. After cure, the ear model is removed from the PVC gel and a female mould is obtained.

Suitable silicone resin compositions for use in making the female mould include RTV type silicones, for example TSE 399 manufactured by Toshiba Silicone Company Limited. The liquid transparent or semi-transparent curable silicone resin composition is placed in a suitable container and the ear model is immersed in the resin composition. After standing for about 48 hours, the silicone resin composition cures and a female mould is obtained by removing the ear model.

Similarly, female moulds can be made by immersing an ear model in a warm aqueous solution of gelatine powder or Konjak powder. On cooling to room temperature, the solutions gel and a female mould is obtained by withdrawing the ear model. In the case of aqueous solutions of sodium alginate, gelation may be effected by adding metal ions other than alkali metal or magnesium ions, for example calcium ions.

In fact, the female mould may be prepared from any transparent or semi-transparent, natural or synthetic material in solution or dispersion form that is capable of solidifying as a result of heating, cooling or addition of an inorganic ion.

Visible light-curable resin compositions which may be used in making the female mould include monomers and oligomers of acrylic or methacrylic compounds or mixtures thereof together with a photointiator and, if necessary, a photosensitiser. Suitable compositions have been described in Japanese Patent Disclosures 48-49875, 55-83706 and 60-32801.

As examples of acrylic and methacrylic monomers, there may be mentioned acrylates, methacrylates, acrylamides and methacrylamides obtainable by reacting acrylic or methacrylic acid with an aliphatic polyhydroxy compound (for example ethylene glycol, diethylene glycol, triethylene glycol, tetraethylene glycol or other diols), an epoxy compound (for example the diglycidyl ether of propylene glycol or bisphenol A) or an amino compound (for example ethylene diamine, hexamethylene diamine, diethylene triamine and the like). As examples of oligomers, there may be mentioned reaction products of urethane-, ester- or carbonate group - containing prepolymers with acrylic or methacrylic acid or a reactive derivative thereof. Suitable photoinitiators, sensitive to visible light, are known and include diketones such as DL-camphorquinone and benzil, thioxanthones such as methylthioxanthone and acyl phosphine oxides such as trimethylbenzoylphosphine oxide. Suitable photosensitisers are known and include amines such as N,N-dimethylaminoethyl methacrylate, isoamyl p-N,N-dimethylaminobenzoate and the like.

Suitable fillers for use in making the hearing aid shells include titanium dioxide (rutile type), silicon dioxide and potassium titanate. Suitable colouring matters include phthalocyanine and azo pigments, triphenylmethane, azo and anthraquinone dyes and other colouring matters such as are used for cosmetics, foods and medicines (Red No. 2, Yellow No. 4, Blue No. 1 and aluminium, barium and zirconium complexes thereof).

The cure of the light-curable resin composition may be effected using conventional sources of visible light, for example tungsten lamps, fluorescent lamps, mercury vapour lamps and xenon lamps.

The coloured hearing aid shell of the invention has the advantage that it can be produced in a single moulding operation and by visible light curing. Furthermore, the shell can be made to correspond completely with the shape of the outer ear of the user and the colour tone of the exterior of the hearing aid can easily be made to match the user's skin colour. A hearing aid user can therefore feel comfortable wearing a hearing aid in accordance with the invention. Additionally, a shell having uniform thickness is obtained so that no howling occurs during use to disturb the comfort of the user. Since the hearing aid shell does not need to be coloured after formation, no shape adjustment is necessary making the whole process simple and easy to operate. Furthermore, the female mould can be made from a quite inexpensive material.

The invention is illustrated but not limited by the following Example in which all parts are by weight and also by the attached Drawing in which :

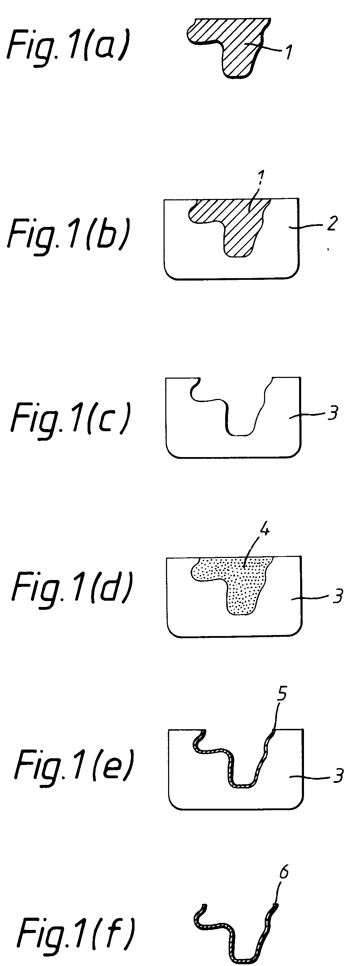

Fig. 1 (a) is a cross-sectional view of an ear model (1);

Fig. 1 (b) is a cross-sectional view of the ear model immersed in a PVC plastisol (2);

Fig. 1 (c) is a cross-sectional view of a female mould (3) formed by gelation of the PVC plastisol;

Fig. 1 (d) is a cross-sectional view of the female mould containing a visible light-curable resin composition (4);

Fig. 1 (e) is a cross-sectional view of the female mould containing a shell (5) of cured resin composition after light-curing and after removal of the uncured resin composition, and

Fig. 1 (f) is a cross-sectional view of the coloured hearing aid shell (6).

## Example

An ear model, as shown in cross-section in Fig. 1 (a), was first prepared by taking an impression of a human outer ear. The ear model was immersed in a PVC plastisol (SH-108T manufactured by Kobayashi KK) contained in a vessel of 50 mm diameter at the bottom and 30 mm in height. After standing at 150°C for 30 minutes to harden the plastisol (Fig. 1 (b)), the ear model was taken out of the PVC gel leaving the female mould (Fig.

1(c)). Then, as shown in Fig. 1 (d), a visible light-curable resin composition having the following constitution was poured into the female mould :

| | |
|---|---|
| Urethane-acrylate resin (a product of ICI) | 40 parts |
| Triethyleneglycol dimethacrylate (a product of Kyoeisha Yushi) | 60 parts |
| DL-camphorquinone | 1 part |
| N,N-dimethylaminoethyl methacrylate | 1 part |
| Titanium dioxide (rutile type) | 5 parts |
| VYNAMON Scarlet 3YFW (a product of ICI) | 0.05 parts |
| (The word VYNAMON is a trade mark) | |

The resin composition in the mould was irradiated for 5 minutes using a visible light irradiation apparatus (manufactured by Egger) of the entire exposure type (light box) equipped with a Dulux S9/71 (the word Dulux is a trade mark) lamp (a product of Osrummerco Co. Ltd.) having an emission maximum at 450 nm. During irradiation, the top of the female mould was shielded by a metal plate to facilitate subsequent removal of uncured composition. After irradiation, uncured resin composition was removed from the female mould leaving a shell of cured resin having uniform thickness as shown in Fig. 1 (e). The cavity of the shell was filled with glycerol and the inside surface of the shell was irradiated for 30 seconds using Luxspot ( a light irradiation apparatus produced by ICI Japan Limited).

After this further irradiation, the glycerol was removed and the cured resin was washed with acetone and then taken out of the mould. As shown in Fig. 1 (f), a coloured hearing aid shell having a uniform thickness of 1.2 mm and a shape corresponding to the ear model was obtained.

Comparative Example

The procedure described in the Example was repeated using 2 parts of a UV-sensitive photoinitiator, Darocur 1173 (a product of Merck & Co.), instead of DL-camphorquinone and N,N-direthylaminoethyl methacrylate and using a UV lamp (Dulux S9/78) having an emission maximum at 365 nm. The resin composition remained uncured.

**Claims**

1. A coloured hearing aid shell comprising a visible light-cured moulding of a visible light curable resin composition containing a filler and/or a colouring matter.

2. A coloured hearing aid shell according to claim 1 wherein the visible light-curable resin composition comprises.
   (a) an acrylic and/or methacrylic monomer and/or oligomer;
   (b) a photoinitiator;
   (c) a filler and/or colouring matter and, if necessary,
   (d) a photosensitiser.

3. A method for the preparation of a coloured hearing aid shell as claimed in claim 1 or claim 2, said method comprising charging a transparent or semi-transparent female mould corresponding to the shape of an outer ear with a visible light-curable resin composition containing a filler and/or a colouring matter and applying visible light from outside the mould to the resin composition in contact with the inner surface of the mould whereby to effect cure of said resin composition to the desired depth.

4. A method according to claim 3 wherein the transparent or semi-transparent female mould is made from a transparent or semi-transparent polyvinyl chloride plastisol, a transparent or semi-transparent curable silicone resin composition or an aqueous solution or dispersion of a natural polymer which is capable of being gelled.

Fig.1(a)

Fig.1(b)

Fig.1(c)

Fig.1(d)

Fig.1(e)

Fig.1(f)